# EUROPEAN PATENT APPLICATION

(11) **EP 4 691 955 A1**
(43) Date of publication of application: **11.02.2026**
(21) Application number: 25193008.7
(22) Date of filing: 31.07.2025
(51) Int. Cl.: B66B 5/00, B66B 25/00

(54) **SYSTEM AND METHOD FOR DETERMINING A HEALTH CONDITION OF MODULES OF A PASSENGER CONVEYOR SYSTEM**

(30) Priority: 06.08.2024 US 202418795631
(71) Applicant: Otis Elevator Company, Farmington CT 06032-2568 (US)
(72) Inventor: Jothy Prakash, Vikram, 500081 Hyderabad (IN); Nallam, Naveena, 500081 Hyderabad (IN); Chikkanti, Venkateswarlu, 500081 Hyderabad (IN); Acharya, Adityanarayan, 500081 Hyderabad (IN); Marpu, Appalaraju, 500081 Hyderabad (IN)
(74) Representative: Winter, Brandl - Partnerschaft mbB

(57) **Abstract**

A passenger conveyor system having: a passenger conveyor disposed in a building; one or more modules, including a first module, operationally coupled to the passenger conveyor; a diagnostic controller configured to receive a first signal from the first module containing first data indicative of an operational condition of the first module, wherein the diagnostic controller is configured to: determine a health condition of each of the one or more modules from the first signal; and issue an alert when the health condition of the one or more modules is indicative of a malfunction.

## Description

### BACKGROUND

The embodiments described herein relate to a passenger conveyor system, such as elevators, escalators, moving walkways, and other automated people movers, and more specifically to a system and method for determining a health condition of modules of a passenger conveyor system.

Technicians often visit a site of a passenger conveyor system to address a reported issue. During the visit, it may be difficult for the technician to determine whether other aspects of the system are working properly.

### BRIEF SUMMARY

Disclosed is a passenger conveyor system including: a passenger conveyor disposed in a building; one or more modules, including a first module, operationally coupled to the passenger conveyor; a diagnostic controller configured to receive a first signal from the first module containing first data indicative of an operational condition of the first module, wherein the diagnostic controller is configured to: determine a health condition of each of the one or more modules from the first signal; and issue an alert when the health condition of the one or more modules is indicative of a malfunction.

In addition to one or more of the above disclosed aspects of the system or as an alternate, the diagnostic controller executes a machine learning model trained on legacy data indicative of an operational influence that the one or more modules have on each other in their respective operational states.

In addition to one or more of the above disclosed aspects of the system or as an alternate, the first data includes sensor data from a sensor operationally coupled to the first module.

In addition to one or more of the above disclosed aspects of the system or as an alternate, the sensor data is indicative of at least one fluctuation outside a predetermined threshold for the first module for one or more of motion, speed, acceleration, vibration, and electrical power.

In addition to one or more of the above disclosed aspects of the system or as an alternate, the diagnostic controller receives the first signal from the first module periodically and/or upon a module controller for the first module identifying the at least one fluctuation outside the predetermined threshold from the sensor data.

In addition to one or more of the above disclosed aspects of the system or as an alternate, the diagnostic controller receives a second signal containing second data indicative of an inspected operational condition of each of the one or more modules and feeds the first data and the second data to the machine learning model for retraining.

In addition to one or more of the above disclosed aspects of the system or as an alternate, the diagnostic controller is operationally coupled to one or more of a mobile phone and a cloud service.

In addition to one or more of the above disclosed aspects of the system or as an alternate, the one or more modules are mounted to the passenger conveyor.

In addition to one or more of the above disclosed aspects of the system or as an alternate, the one or more modules include a first module and a second module that differ from each other.

In addition to one or more of the above disclosed aspects of the system or as an alternate, the passenger conveyer is one or more of an elevator, an escalator and a movable walkway.

Disclosed is a method of determining a health condition of modules operationally coupled to a passenger conveyor of a passenger conveyor system in a building, the method including: receiving, by a diagnostic controller, a first signal from a first module containing first data indicative of an operational condition of the first module; determining, by the diagnostic controller, a health condition of each of the modules from the first signal; and issuing, by the diagnostic controller, an alert when the health condition of the one or more modules is indicative of a malfunction.

In addition to one or more of the above disclosed aspects of the method or as an alternate, the method includes executing, by the diagnostic controller, a machine learning model trained on legacy data indicative of an operational influence that the one or more modules have on each other in their respective operational states.

In addition to one or more of the above disclosed aspects of the method or as an alternate, the first data includes sensor data from a sensor operationally coupled to the first module.

In addition to one or more of the above disclosed aspects of the method or as an alternate, the sensor data is indicative of at least one fluctuation outside a predetermined threshold for the first module for one or more of motion, speed, acceleration, vibration, and electrical power.

In addition to one or more of the above disclosed aspects of the method or as an alternate, the method includes receiving, by the diagnostic controller, the first signal from the first module periodically and/or upon a module controller for the first module identifying the at least one fluctuation outside the predetermined threshold from the sensor data.

In addition to one or more of the above disclosed aspects of the method or as an alternate, the method includes: receiving, by the diagnostic controller, a second signal containing second data indicative of an inspected operational condition of each of the one or more modules; and feeding, by the diagnostic controller, the first data and the second data to the machine learning model for retraining.

In addition to one or more of the above disclosed aspects of the method or as an alternate, the diagnostic controller is operationally coupled to one or more of a mobile phone and a cloud service.

In addition to one or more of the above disclosed aspects of the method or as an alternate, the one or more modules are mounted to the passenger conveyor.

In addition to one or more of the above disclosed aspects of the method or as an alternate, the one or more modules include a first module and a second module that differ from each other.

In addition to one or more of the above disclosed aspects of the method or as an alternate, the passenger conveyer is one or more of an elevator, an escalator and a movable walkway.

### BRIEF DESCRIPTION OF THE DRAWINGS

The present disclosure is illustrated by way of example and not limited in the accompanying figures in which like reference numerals indicate similar elements.
FIG. 1 is a schematic illustration of a passenger conveyor system, and in particular an elevator system, that may employ various embodiments of the present disclosure;
FIG. 2 shows a system configured to determine a health condition of modules operationally coupled to a passenger conveyor of a passenger conveyor system in a building, according to an embodiment; and
FIG. 3 shows a method of determining a health condition of modules operationally coupled to a passenger conveyor of a passenger conveyor system in a building, according to an embodiment.

### DETAILED DESCRIPTION

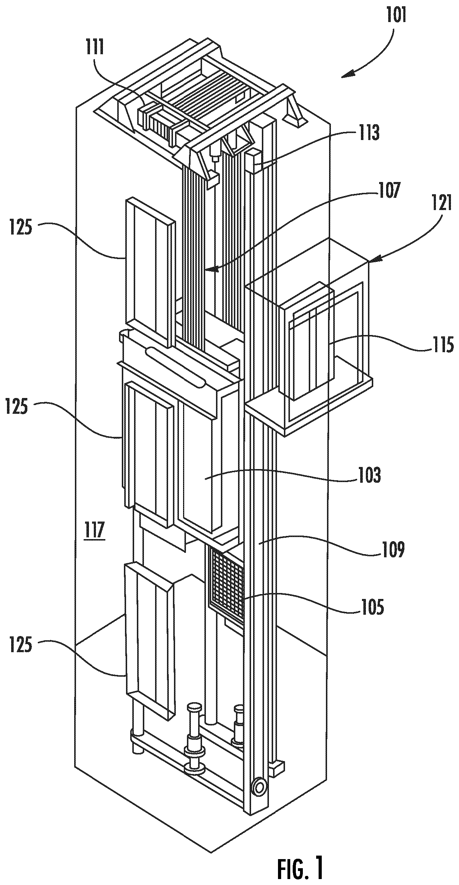

FIG. 1 is a perspective view of a passenger conveyor system, and in particular an elevator system 101 in a building, including an elevator car 103 (generally, a passenger conveyor), a counterweight 105, a tension member 107, a guide rail (or rail system) 109, a machine (or machine system) 111, a position reference system 113, and an electronic elevator controller (generally, a device controller) 115. The controller 115, may be directly connected to the car 103 or located separately in the building, or may be part of an elevator management system (EMS) in a control room in the building, as non-limiting examples. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

Though elevator systems are disclosed in depth herein as a nonlimiting example, the present disclosure is equally applicable to other forms of passenger conveyor systems. Passenger conveyor systems include moving walkways and escalators and other automated people movers as nonlimiting alternatives to elevator systems, all of which move people between and along different levels in a building.

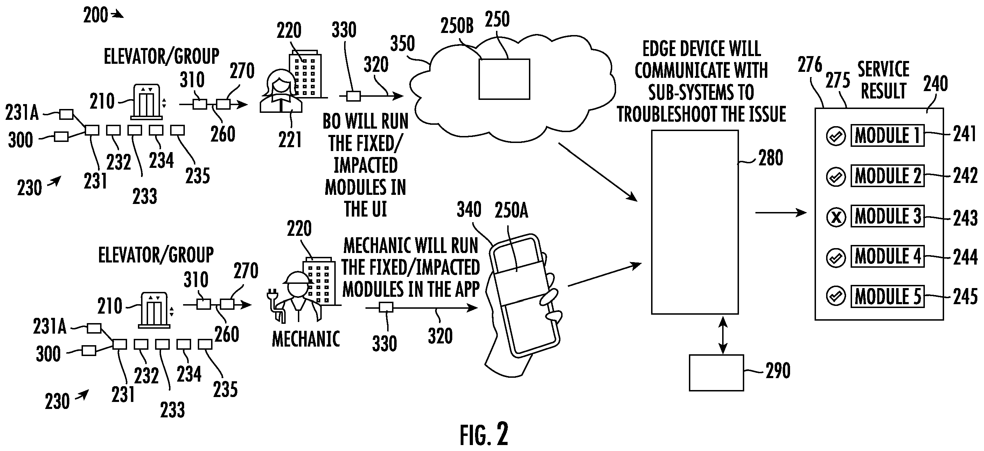

Turning to FIG. 2, the figure shows a passenger conveyor system 200. The system 200 includes a conveyor 210 disposed in a building 220 having a mechanic 221 who can remotely monitor the system 200 utilizing a commercially available solution such as REM (remote elevator monitoring) available through Otis Worldwide Corporation (also known as Otis Elevator Company). The passenger conveyer 210 may be one or more of an elevator, an escalator and a movable walkway. Modules 230 (e.g., one or more modules 230), including a first module 231, may be operationally coupled to, and/or mounted to, the passenger conveyor 210. The modules 230 may include a first module 231 that is a conveyer controller. A second module 232 may be a power control circuit board for the passenger conveyer 210. A third module 233 may be a camera located on or near the passenger conveyor 210. A fourth module 234 may be an electronic display located on or near the passenger conveyor 210. A fifth module 235 may be a two-way voice and video communication system located on or near the passenger conveyor 210. It is to be appreciated that the number of modules identified herein is not intended on limiting the scope of the embodiments, which may have greater or fewer than five modules.

A diagnostic controller 250, which may be regular controller having access to diagnostic code, such as executable software on a non-transitory medium, may be configured to receive a first signal 260 from the first module 231. The first signal 260 may contain first data 270 indicative of an operational condition of the first module 231. In one embodiment, the first data 270 includes sensor data 300 from a sensor 310 operationally coupled to the first module 231. In one embodiment, the sensor data 300 includes one or more of motion, speed, acceleration, vibration, and electrical power draw or supply related to the first module 231. Communications between the diagnostic controller 250 and the first module 231 may be via wired or wireless connections over one or more of a controller area network (CAN), a cellular network, a local or wide area network, as non-limiting examples.

According to the embodiments, the diagnostic controller 250 is configured to determine a health condition of each of the modules 230 from the first signal 260, as described in further detail below. The diagnostic controller 250 is configured to issue an alert 275 when the health condition of one or more of the modules 230 is indicative of a malfunction. The alert 275 may be on a display 276 located in, e.g., a management system, a non-limiting example is an elevator management system (EMS) in the building 220.

In one embodiment, the diagnostic controller 250 executes a machine learning model 280 trained, e.g., as the diagnostic code, on legacy data 290. The data may be indicative of an operational influence that the modules 230 have on each other in their respective operational states. For example, the confluence of different levels of operational states of the modules, including malfunctioning states, may present with the first module 231 exhibiting specific leading indicator behavior. The leading indicator behavior may include at least one fluctuation outside a predetermined acceptable threshold for sensed motion, vibrations, sounds, power utilization, or other characteristics that are indicative of a module or system malfunction.

That is, according to the embodiments, predictions can be made with regard to the operational state of a module 230.The predictions are based on analyzing sensor data 300 captured while the module 230 is utilized, and applying the data to the trained machine learning model 280. Prediction of a state of multiple modules 230 of the operationally integrated passenger conveyor system may be obtained feeding the trained model with data obtained from one of the modules 230. That is data may be captured, including operational sounds, vibrations, etc., for one or more, e.g., and optionally fewer than all, of the modules 230. That data may be run through the model 280 that is trained to account for the behavioral influence (constructive and destructive) that the modules 230 have on each other in their respective operational states, including when they are functioning within and outside of acceptable tolerances. A discussion of the training and utilization of such models is described in greater detail below.

In one embodiment, the diagnostic controller 250 periodically receives the first signal 260 from the first module 231. In addition, or alternatively, the diagnostic controller 250 receives the first signal 260 when a module controller 231A for the first module 231 identifies the at least one parameter fluctuation outside the predetermined threshold, e.g., from the sensor data 300. If the alert 275 is issued, it may graphically list on the display 276 all modules 240 with respective indicia 241-245 for each one of the modules 231-235, identifying which of the modules 230 is potentially malfunctioning. E.g., a graphical check may mean the module is functioning and a graphical 'x' may mean the module is malfunctioning.

After the modules 230 are inspected, e.g., by a mechanic either on-site or remotely, information relating to the findings of the mechanic may be recorded to evaluate and retrain the model 280. That is, according to an embodiment, the diagnostic controller 250 receives a second signal 320 containing second data 330 indicative of an inspected operational condition of each of the modules 230 and feeds the first data 270 and the second data 330 to the machine learning model 280 for retraining.

In one embodiment, the diagnostic controller 250 is operationally coupled to one or more of a mobile phone 340, e.g., of a mechanic, and a cloud service 350. That is the first signal 320 may be transmitted to one or both of these diagnostic systems. The mobile phone 340 and/or cloud service 250 may be configured to independently access and run the trained model 280 to identify potential issues with the modules 230. If both diagnostic systems are utilized to run the trained model 280, their results can be compared for accuracy. In addition, in one embodiment, the modules 230, the conveyor 210, and/or any controller of the system 200 may be configured for edge computing to execute the trained model 280, in whole or in part, to identify potential malfunctions and resolutions.

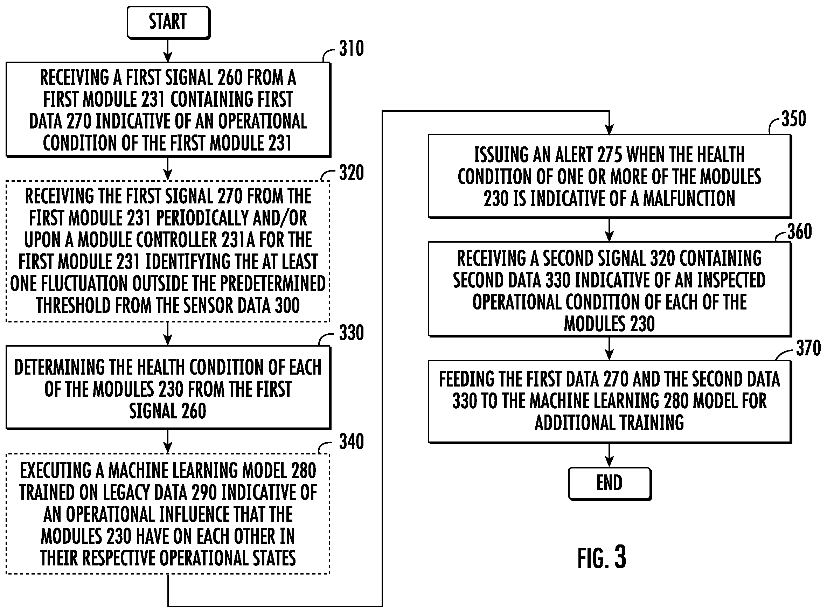

Turning to FIG. 3, a flowchart shows a method of determining a health condition of modules 230 operationally coupled to a conveyor 210 of the passenger conveyor system 200 in the building 220. Boxes in dashed lines in the flow chart represent further explanations of one or more preceding steps and are not intended on limiting the scope of the embodiments. As indicated, the passenger conveyer 210 may be one or more of an elevator, an escalator and a movable walkway. The modules 230 may be near or mounted to the passenger conveyor and include, e.g., the first module 231 that is a conveyer controller. A second module 232 may be a power control circuit board. A third module 233 may be a camera. A fourth module 234 may be an electronic display. A fifth module 235 may be a two-way voice and video communication system.

As shown in block 310, the method includes receiving, by the diagnostic controller 250, the first signal 260 from a first module 231 containing first data 270 indicative of an operational condition of the first module 231. As indicated, the first data 270 includes sensor data 300 from a sensor 310 operationally coupled to the first module 231. As indicated, the sensor data 300 is indicative of at least one fluctuation outside a predetermined threshold for the first module 231 for one or more of motion, speed, acceleration, vibration, and electrical power.

As shown in block 320, the method includes periodically receiving, by the diagnostic controller 250, the first signal 260 from the first module 231 and/or upon a module controller 231A for the first module 231 identifying the at least one fluctuation outside the predetermined threshold from the sensor data 300. As shown in block 330, the method includes determining, by the diagnostic controller 250, the health condition of each of the modules 230 from the first signal 260. As shown in block 340, the method includes executing, by the diagnostic controller 250, a machine learning model 280 trained on legacy data 290 indicative of an operational influence that the modules 230 have on each other in their respective operational states. As shown in block 330, the method includes issuing, by the diagnostic controller 250, an alert 275 when the health condition of one or more of the modules 230 is indicative of a malfunction.

As shown in block 360, the method includes receiving, by the diagnostic controller 250, a second signal 320 containing second data 330 indicative of an inspected operational condition of each of the modules 230. As shown in block 370, the method includes feeding, by the diagnostic controller 250, the first data 270 and the second data 330 to the machine learning 280 model for retraining.

As indicated above, the embodiments are directed to a system controller configured for automatically collecting and reviewing data relevant to an operational health of the system. The collection and review may be triggered by the system receiving communications indicative of an alert condition for a system module. The communications received by a diagnostic controller may originate remotely, e.g. utilizing remote elevator monitoring (REM), or by a mechanic on-site. An analytics engine executing a trained module may assist the mechanic in troubleshooting and estimating the overall health of the elevator system.

With the embodiments, having operational and sensor data from a controlled setting increases an accuracy of predictive and diagnostic service analytics applications. The disclosed embodiments are applicable to various service activities related to passenger conveyor systems, including but not limited to remote elevator inspection (REI) and condition based maintenance (CBM).

For example, utilizing the disclosed embodiments, a determination can be made whether system modules are operating within acceptable parameters. The modules include camera streaming modules and voice and video (VV) call modules. The modules may also include low voltage power boards (LVPB) which may control power of the passenger conveyor, e.g., turning the passenger conveyor on and off and setting the passenger conveyor into an inspection mode. The modules may also include a common passenger interface board (CPIB), which is a customized microcontroller board that manages the control of various functionalities of the passenger conveyor. The modules may also include an electronics display having a video and audio playlists for passengers to direct their attention while engaging the conveyor. By utilizing the embodiments, mechanic, applying REI, over-the-air (OTA), mechanics may be assisted in making all of the modules and/or subsystems are working properly.

Regarding the implementation of artificial intelligence (AI) identified herein, expressly or inherently, a machine learning model, e.g., part of an artificial intelligence (AI) system, may be utilized in the embodiment. An AI system simulates human intelligence using a digital computer or a machine controlled by a digital computer, senses the environment, e.g., using available sensors including speed, acceleration, vibration, sound, video and the like, and acquires knowledge and uses the knowledge to obtain the optimum results. The AI infrastructure includes technologies such as the sensors, dedicated artificial intelligence chips, cloud computing, distributed storage, big data processing technologies, operation/interaction systems, mechatronics, and the like. Some implementations of AI according to the embodiments utilize computer vision technology, voice processing technology, a natural language processing technology, machine learning/deep learning and the like.

Some implementations of AI according to the embodiments utilize pre-trained (PT) machine translation models that adopt a sequence-to-sequence (sequence-sequence or S-S) framework based on a neural network. The S-S framework is a framework including an encoder-decoder structure. The encode-decoder structure converts an input sequence into another sequence output. In this framework, the encoder converts the input sequence into vectors, and the decoder accepts the vectors and generates the output sequence in time order. The encoder and the decoder may utilize the same type of neural network model, or may utilize different types of neural network models. The neural network model may be a CNN (Convolutional Neural network) model, an RNN (redundant Neural network) model, a long-short-term memory (LSTM) model, a delay network model, a gated CNN model, or the like.

The trained machine learning models, once trained, can analyze the input data, and in one or more aspects, predict and/or characterize features included in the sensed data. In the case of video, in one non-limiting example, the sensed data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data. In some instances, the one or more trained machine learning models include or are associated with a preprocessing or augmentation (e.g., intensity normalization, resizing, cropping, and/or the like including combinations and/or multiples thereof) that is performed prior to segmenting the video data. An output of the one or more trained machine learning models can include a prediction of aspects the video data, a location and/or position of the aspects within the video data, and/or state of the aspects. The location can be a set of coordinates in an image/frame in the video data. The trained machine learning models, in one or more examples, are trained to perform higher-level predictions and tracking.

Similar predictions can be made with regard to the operational state of a device by analyzing sensor data captured while the device is utilized and applying the data to trained machine learning models. For example, utilizing a serviced learning technique, the model is trained on known inputs and outputs from legacy events to predict future outputs from future inputs. The models may be evaluated so that variables may be weighted or re-weighted to more accurately correlate inputs and outputs, and the model may be re-retrained as more inputs and outputs are collected. For example, the prediction of a state of multiple devices of an operationally integrated system of devices may be obtained utilizing a trained model. Data may be captured, including operational sounds, vibrations, etc., for one (or fewer than all) of the devices, and the captured data may be run through a trained model that is trained to identify the influence (constructive and destructive) that the devices have on each other in their respective operational states, including when they are functioning within and outside of acceptable tolerances.

Regarding telecommunication implementations identified herein, expressly or inherently, wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radiofrequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Regarding computing technologies identified herein, expressly or inherently, each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A passenger conveyor system comprising:
a passenger conveyor disposed in a building;
one or more modules, including a first module, operationally coupled to the passenger conveyor;
a diagnostic controller configured to receive a first signal from the first module containing first data indicative of an operational condition of the first module,
wherein the diagnostic controller is configured to:
determine a health condition of each of the one or more modules from the first signal; and
issue an alert when the health condition of the one or more modules is indicative of a malfunction.

2. The system of claim 1, wherein the diagnostic controller executes a machine learning model trained on legacy data indicative of an operational influence that the one or more modules have on each other in their respective operational states.

3. The system of claim 1, wherein the first data includes sensor data from a sensor operationally coupled to the first module.

4. The system of claim 3, wherein the sensor data is indicative of at least one fluctuation outside a predetermined threshold for the first module for one or more of motion, speed, acceleration, vibration, and electrical power, preferably wherein the diagnostic controller receives the first signal from the first module periodically and/or upon a module controller for the first module identifying the at least one fluctuation outside the predetermined threshold from the sensor data.

5. The system of claim 1, wherein the diagnostic controller receives a second signal containing second data indicative of an inspected operational condition of each of the one or more modules and feeds the first data and the second data to the machine learning model for retraining, or wherein the diagnostic controller is operationally coupled to one or more of a mobile phone and a cloud service.

6. The system of claim 1, wherein the one or more modules are mounted to the passenger conveyor, or wherein the one or more modules include a first module and a second module that differ from each other.

7. The system of claim 1, wherein the passenger conveyer is one or more of an elevator, an escalator and a movable walkway.

8. A method of determining a health condition of modules operationally coupled to a passenger conveyor of a passenger conveyor system in a building, the method comprising:
receiving, by a diagnostic controller, a first signal from a first module containing first data indicative of an operational condition of the first module;
determining, by the diagnostic controller, a health condition of each of the modules from the first signal; and
issuing, by the diagnostic controller, an alert when the health condition of the one or more modules is indicative of a malfunction.

9. The method of claim 8, comprising
executing, by the diagnostic controller, a machine learning model trained on legacy data indicative of an operational influence that the one or more modules have on each other in their respective operational states.

10. The method of claim 8, wherein the first data includes sensor data from a sensor operationally coupled to the first module.

11. The method of claim 10, wherein the sensor data is indicative of at least
one fluctuation outside a predetermined threshold for the first module for one or more of motion, speed, acceleration, vibration, and electrical power, preferably the method further comprising
receiving, by the diagnostic controller, the first signal from the first module periodically and/or upon a module controller for the first module identifying the at least one fluctuation outside the predetermined threshold from the sensor data.

12. The method of claim 8, comprising:
receiving, by the diagnostic controller, a second signal containing second data indicative of an inspected operational condition of each of the one or more modules; and
feeding, by the diagnostic controller, the first data and the second data to the machine learning model for retraining.

13. The method of claim 8, wherein the diagnostic controller is operationally coupled to one or more of a mobile phone and a cloud service.

14. The method of claim 8, wherein the one or more modules are mounted to the passenger conveyor, or wherein the one or more modules include a first module and a second module that differ from each other.

15. The method of claim 8, wherein the passenger conveyer is one or more of an elevator, an escalator and a movable walkway.
